# EUROPEAN PATENT APPLICATION

(11) **EP 4 305 984 A1**
(43) Date of publication of application: **17.01.2024**
(21) Application number: 21945989.8
(22) Date of filing: 16.06.2021
(51) Int. Cl.: A24F 40/46

(54) **AEROSOL GENERATION SYSTEM**

(71) Applicant: Japan Tobacco, Inc., Tokyo, 105-6927 (JP)
(72) Inventor: YAMADA, Manabu, Tokyo 130-8603 (JP); INOUE, Yasunobu, Tokyo 130-8603 (JP)
(74) Representative: Hoffmann Eitle
(86) International application number: PCT/JP2021/022864
(87) International publication number: WO 2022/264312

(57) **Abstract**

[Problem] To provide a mechanism that can heat a substrate more appropriately. [Solution] An aerosol generation system including: an accommodating unit into which an aerosol generation article is to be inserted; a heating unit for heating the aerosol generation article inserted into the accommodating unit; and an electric power supply unit for supplying the heating unit with electric power, wherein the heating unit includes a film-shaped electrical insulating unit having one or more cutouts and an electrical resistance unit disposed on the electrical insulating unit and producing heat with electric power supplied from the electric power supply unit, and the heating unit is disposed around the accommodating unit.

## Description

### Technical Field

The present invention relates to an aerosol generation system.

### Background Art

Inhaler devices, such as electronic cigarettes and nebulizers, that generate material to be inhaled by users are widespread. For example, an inhaler device generates an aerosol having a flavor component imparted thereto by using a substrate that includes an aerosol source for generating an aerosol, a flavor source for imparting a flavor component to the generated aerosol, and the like. A user can enjoy a flavor by inhaling the aerosol generated by the inhaler device and having the flavor component imparted thereto. An action of a user inhaling an aerosol will hereinafter be also referred to as a puff or a puff action.

An aerosol is typically generated by heating a substrate. For example, Patent Literature 1 below discloses a technology for heating a substrate by using a single film heater that is wound in a tubular shape so as to surround the substrate.

### Citation List

### Patent Literature

Patent Literature 1: JP 6210610 B2

### Summary of Invention

### Technical Problem

In the technology disclosed in Patent Literature 1 mentioned above, the film heater is wound around the outer side of a tubular body in which the substrate is accommodated. In the case where a gap is formed between the film heater and the tubular body, it may be difficult to appropriately heat the substrate.

Accordingly, the present invention has been made in view of the above problem, and it is an object of the present invention to provide a mechanism capable of more appropriately heating a substrate.

### Solution to Problem

In order to solve the above problem, an aspect of the present invention provides an aerosol generation system including a container into which an aerosol generation article is inserted, a heater that heats the aerosol generation article inserted into the container, and a power supply unit that supplies electric power to the heater. The heater includes at least one electrically insulative portion that has a film-like shape and one or more cutouts and an electrically resistive portion that is disposed on the electrically insulative portion and that produces heat by using electric power supplied by the power supply unit. The heater is disposed around the container.

The one or more cutouts of the electrically insulative portion may be two or more cutouts that are formed in a staggered manner.

The two or more cutouts may be formed in a staggered manner in a direction perpendicular to directions in which the aerosol generation article is inserted and extracted.

The electrically insulative portion may include two or more first portions extending in directions in which the aerosol generation article is inserted and extracted and one or more second portions connecting ends of two of the first portions to each other, the two first portions being adjacent to each other in a direction perpendicular to the directions in which the aerosol generation article is inserted and extracted. The two first portions connected to each other by the one or more second portions may be isolated from each other with the one or more cutouts interposed between the two first portions in the direction perpendicular to the directions in which the aerosol generation article is inserted and extracted.

The two or more first portions of the electrically insulative portion may be three or more first portions, and the one or more second portions of the electrically insulative portion may be two or more second portions. Two of the second portions that are connected to the same one of the first portions may be isolated from each other in the directions in which the aerosol generation article is inserted and extracted.

The electrically insulative portion may be formed in an M-shape.

The electrically insulative portion may be formed in a zigzag shape.

The electrically insulative portion may cover less than 50% of a side surface of the container in all cross sections perpendicular to directions in which the aerosol generation article is inserted and extracted.

The at least one electrically insulative portion of the heater may include two electrically insulative portions. The electrically resistive portion may be sandwiched between the two electrically insulative portions.

The aerosol generation system may further include a thermal diffusion layer that diffuses heat. The thermal diffusion layer may be disposed in such a manner as to cover an outer side of the heater.

The thermal diffusion layer may be made of copper, graphite, or aluminum.

The heater may be disposed around the container and fixed to the container by a heat-shrinkable tube while being covered with a heat insulating layer.

The heater may have a plurality of areas that produce heat at different temperatures in directions in which the aerosol generation article is inserted and extracted.

The electrically resistive portion may be unevenly distributed in directions in which the aerosol generation article is inserted and extracted.

The electrically insulative portion may be made of a polyimide.

The electrically insulative portion may be a film.

The electrically insulative portion may be a varnish.

The electrically resistive portion may be made of a SUS.

The electrically resistive portion may be a conductive track.

The aerosol generation system may further include the aerosol generation article.

### Advantageous Effects of Invention

According to the present invention, as described above, the mechanism capable of more appropriately heating a substrate is provided.

### Brief Description of Drawings

[Fig. 1] Fig. 1 is a schematic diagram schematically illustrating a configuration example of an inhaler device.
[Fig. 2] Fig. 2 is a developed plan view of a heater according to the present embodiment.
[Fig. 3] Fig. 3 is a diagram illustrating an arrangement of the heater according to the present embodiment.
[Fig. 4] Fig. 4 is a sectional view of a portion of the inhaler device according to the present embodiment at which the heater is disposed.
[Fig. 5] Fig. 5 is a developed plan view of a heater according to a modification.

### Description of Embodiments

A preferred embodiment of the present invention will be described in detail below with reference to the accompanying drawings. Note that, in the present specification and the drawings, structural elements that have substantially the same functional configuration are denoted by the same reference signs, and repeated descriptions thereof will be omitted.

### <1. Configuration example of inhaler device>

An inhaler device generates material to be inhaled by a user. In the example described below, the material generated by the inhaler device is an aerosol. Alternatively, the material generated by the inhaler device may be gas.

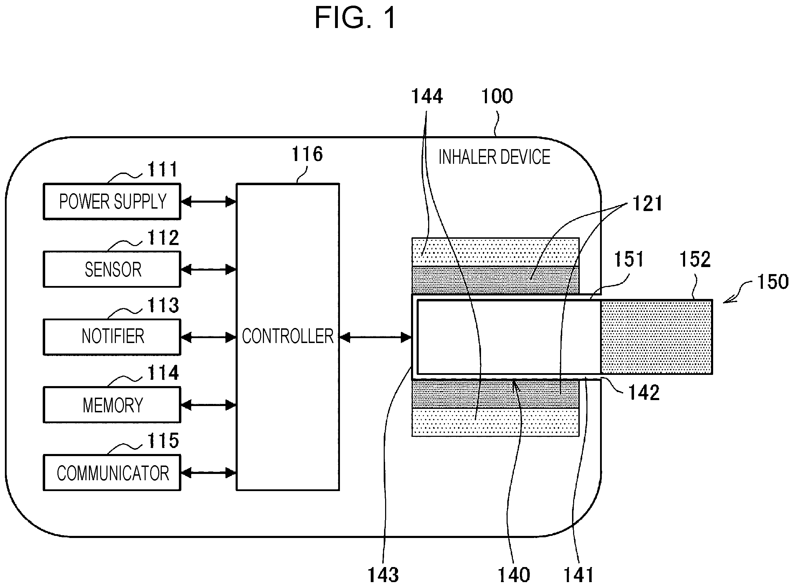

Fig. 1 is a schematic diagram schematically illustrating a configuration example of an inhaler device. As illustrated in Fig. 1, an inhaler device 100 according to the present configuration example includes a power supply 111, a sensor 112, a notifier 113, a memory 114, a communicator 115, a controller 116, a heater 121, a container 140, and a heat insulator 144.

The power supply 111 stores electric power. The power supply 111 supplies electric power to the structural elements of the inhaler device 100 under the control of the controller 116. The power supply 111 may be a rechargeable battery such as a lithium ion secondary battery.

The sensor 112 acquires various items of information regarding the inhaler device 100. In an example, the sensor 112 may be a pressure sensor such as a condenser microphone, a flow sensor, or a temperature sensor, and acquire a value generated in accordance with the user's inhalation. In another example, the sensor 112 may be an input device that receives information input by the user, such as a button or a switch.

The notifier 113 provides information to the user. The notifier 113 may be a light-emitting device that emits light, a display device that displays an image, a sound output device that outputs sound, or a vibration device that vibrates.

The memory 114 stores various items of information for operation of the inhaler device 100. The memory 114 may be a non-volatile storage medium such as flash memory.

The communicator 115 is a communication interface capable of communication in conformity with any wired or wireless communication standard. Such a communication standard may be, for example, Wi-Fi (Registered Trademark), Bluetooth (Registered Trademark), or the like.

The controller 116 functions as an arithmetic processing unit and a control circuit, and controls the overall operations of the inhaler device 100 in accordance with various programs. The controller 116 includes electronic circuits such as a central processing unit (CPU) and a microprocessor, for example.

The container 140 has an internal space 141, and holds a stick substrate 150 in a manner partially accommodated in the internal space 141. The container 140 has an opening 142 that allows the internal space 141 to communicate with outside. The container 140 holds the stick substrate 150 that is inserted into the internal space 141 through the opening 142. For example, the container 140 may be a tubular body having the opening 142 and a bottom 143 on its ends, and may define the pillar-shaped internal space 141. The container 140 also has a function of defining a flow path of air to be supplied to the stick substrate 150. An air inlet hole that is an inlet of air into the flow path is formed in the bottom 143. An air outlet hole that is an outlet of the air from the flow path is the opening 142.

The stick substrate 150 includes a substrate 151 and an inhalation port 152. The substrate 151 includes an aerosol source. Note that, in the present configuration example, the aerosol source is not limited to being a liquid and may be a solid. The stick substrate 150 held by the container 140 includes the substrate 151 at least partially accommodated in the internal space 141 and the inhalation port 152 at least partially protruding from the opening 142. When the user inhales with the inhalation port 152 protruding from the opening 142 in his/her mouth, air flows into the internal space 141 through the air inlet hole (not illustrated), and the air and an aerosol generated from the substrate 151 reach inside the mouth of the user.

The heater 121 heats the aerosol source to atomize the aerosol source and generate the aerosol. In the example illustrated in Fig. 1, the heater 121 has a film-like shape and surrounds the outer circumference of the container 140. Subsequently, heat produced from the heater 121 heats the substrate 151 of the stick substrate 150 from the outer circumference, generating the aerosol. The heater 121 produces heat when receiving electric power from the power supply 111. In an example, the electric power may be supplied in response to the sensor 112 detecting a start of the user's inhalation and/or an input of predetermined information. Subsequently, the supply of the electric power may be stopped in response to the sensor 112 detecting an end of the user's inhalation and/or an input of predetermined information.

The heat insulator 144 prevents heat from transferring from the heater 121 to the other structural elements. For example, the heat insulator 144 may be a vacuum heat insulator or an aerogel heat insulator.

The configuration example of the inhaler device 100 has been described above. The inhaler device 100 is not limited to the above configuration, and may be configured in various ways as exemplified below.

As an example, the container 140 may include an opening/closing mechanism, such as a hinge, that partially opens and closes an outer shell defining the internal space 141. The container 140 may sandwich, by opening and closing the outer shell, the stick substrate 150 inserted in the internal space 141. In this case, the heater 121 may be provided at a position where the container 140 sandwiches the stick substrate 150 and may heat the stick substrate 150 while pressing the stick substrate 150.

Here, the power supply 111 is an example of a power supply unit that supplies electric power to the heater 121. The stick substrate 150 is an example of an aerosol generation article including an aerosol source.

The inhaler device 100 and the stick substrate 150 cooperate with each other in generating an aerosol to be inhaled by a user. Thus, the combination of the inhaler device 100 and the stick substrate 150 may be regarded as an aerosol generation system.

### <2. Detailed Configuration of Heater>

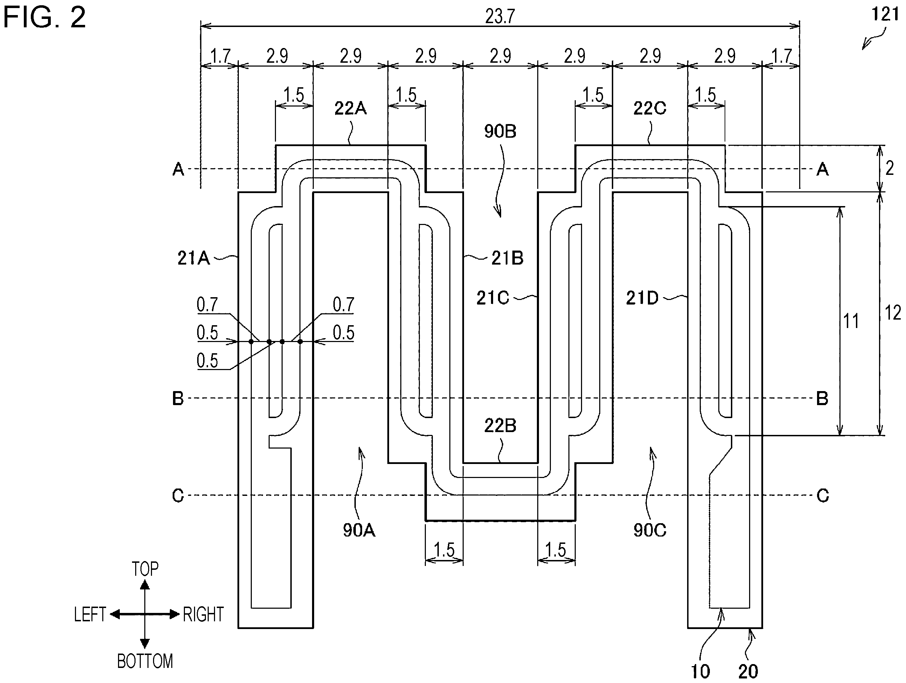

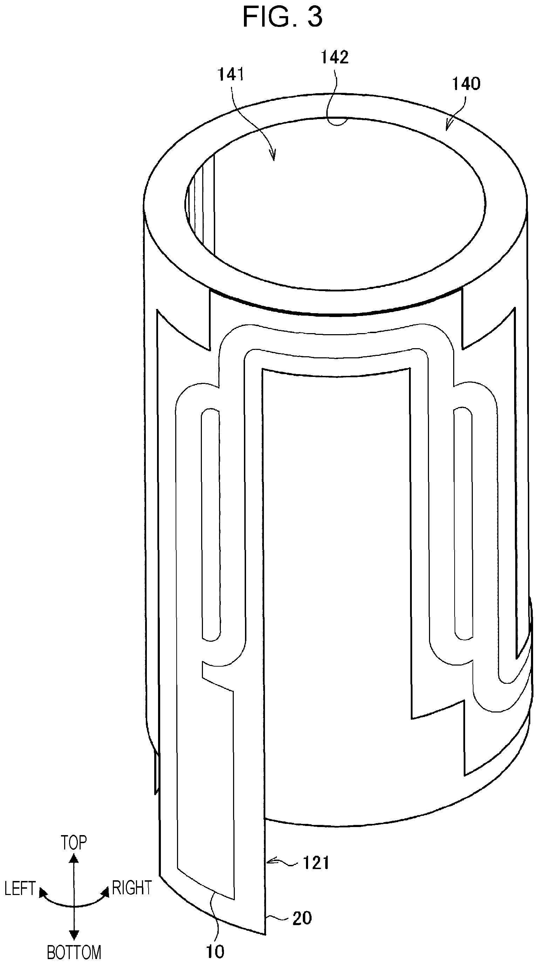

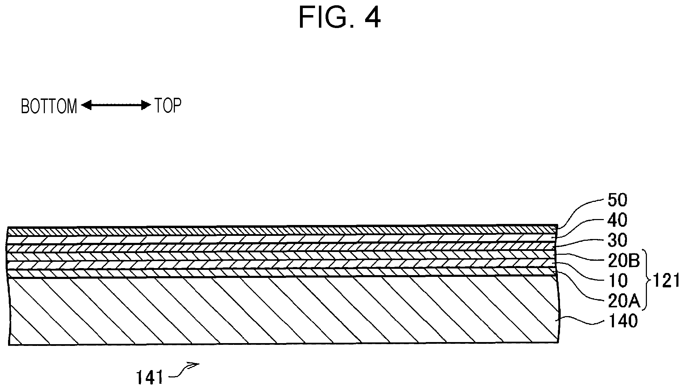

Fig. 2 is a developed plan view of the heater 121 according to the present embodiment. Fig. 3 is a diagram illustrating an arrangement of the heater 121 according to the present embodiment. Fig. 4 is a sectional view of a portion of the inhaler device 100 according to the present embodiment at which the heater 121 is disposed.

As illustrated in Fig. 2, the heater 121 includes an electrically resistive portion 10 and an electrically insulative portion 20. In Fig. 2, the dimensions of the electrically resistive portion 10 and the dimensions of the electrically insulative portion 20 are illustrated in units of millimeters (mm).

As illustrated in Fig. 3, the heater 121 is disposed around the container 140. The container 140 is made of, for example, a material having a predetermined thermal conductivity such as a steel use stainless (SUS). Consequently, the stick substrate 150, which is accommodated in the internal space 141 of the container 140, can be heated by the heat produced by the heater 121 through the container 140.

As illustrated in Fig. 4, an electrically insulative portion 20A, the electrically resistive portion 10, an electrically insulative portion 20B, a thermal diffusion layer 30, a heat insulating layer 40, and a heat-shrinkable tube 50 are laminated on the side surface of the container 140.

Note that, in the present specification and the drawings, structural elements that have substantially the same functional configuration may sometimes be distinguished from each other by adding different letters to the same reference sign. For example, a plurality of structural elements that have substantially the same functional configuration are distinguished from each other as the electrically insulative portions 20A and 20B as necessary. However, when it is not particularly necessary to distinguish a plurality of structural elements that have substantially the same functional configuration, only the same reference sign is given to them. For example, when it is not particularly necessary to distinguish the electrically insulative portions 20A and 20B from each other, they will be simply referred to as the electrically insulative portion 20.

The direction in which the stick substrate 150 is inserted with respect to the heater 121 in the above-mentioned drawings is also referred to as a downward direction. The direction in which the stick substrate 150 is extracted from the heater 121 is also referred to as an upward direction. In other words, the vertical direction corresponds to the directions in which the stick substrate 150 is inserted and extracted. The vertical direction corresponds to the longitudinal direction of the container 140.

In addition, a direction that is perpendicular to the vertical direction and that is a direction along the outer periphery of the container 140 in a cross-section perpendicular to the longitudinal direction of the container 140 will be also referred to as a transverse direction. As illustrated in Fig. 3, when the container 140 is formed in a cylindrical shape, the transverse direction corresponds to a circumferential direction in a circular cross-section perpendicular to the longitudinal direction of the container 140.

The structural elements relating to the heater 121 will each be described in detail below.

The electrically resistive portion 10 produces heat by using the electric power supplied by the power supply 111. More specifically, the electrically resistive portion 10 produces Joule heat when a current flows therethrough. The electrically resistive portion 10 is made of, for example, a steel use stainless (SUS). In this case, the electrically resistive portion 10 can exhibit high heat resistance.

As an example, the electrically resistive portion 10 may be a conductive track. The conductive track is extended around the container 140 while being bent. The side surface of the container 140 can be heated with any heat distribution in accordance with the distribution of the conductive track around the container 140.

The electrically insulative portion 20 is a film-shaped member having an electrical insulating property. The electrically insulative portion 20 may be a film. Alternatively, the film that serves as the electrically insulative portion 20 may be formed by applying a varnish. The electrically insulative portion 20 is made of any material having an electrical insulating property. For example, the electrically insulative portion 20 is made of a polyimide. According to the above-described configuration, the electrically insulative portion 20 can exhibit high heat resistance.

The electrically resistive portion 10 is disposed on the electrically insulative portion 20. In particular, the heater 121 may include the two electrically insulative portions 20 (20A and 20B), and the electrically resistive portion 10 may be sandwiched between these two electrically insulative portions 20. According to such a configuration, the electrically resistive portion 10 is prevented from being short-circuited due to contact with another electric conductor.

As illustrated in Fig. 2 and Fig. 3, the electrically insulative portion 20 has cutouts 90 (90A to 90C). Thus, portions of the heater 121 excluding the cutouts 90 cover the side surface of the container 140. The side surface of the container 140 is exposed through the cutouts 90. According to such a configuration, in the case where irregularities are formed on the side surface of the container 140, the heater 121 can be brought into close contact with the side surface of the container 140 while avoiding the irregularities of the side surface of the container 140 by using the cutouts 90. In the case where the cutouts 90 are not provided, there is a possibility that a gap will be formed between an uneven portion of the side surface of the container 140 and the heater 121 and that the temperature at the gap will rapidly increase, which in turn damages the heater 121. Regarding this, according to such a configuration, since the heater 121 is brought into close contact with the container 140, the heater 121 can be prevented from becoming damaged. In the manner described above, appropriate heating of the stick substrate 150 is achieved.

As illustrated in Fig. 2 and Fig. 3, the electrically insulative portion 20 includes two or more cutouts 90 that are formed in a staggered manner. The electrically resistive portion 10 is disposed on the electrically insulative portion 20 and is not disposed at the cutouts 90, and thus, if the cutouts 90 are arranged in a biased direction, the distribution of the electrically resistive portion 10 will be biased accordingly. Regarding this, according to such a configuration, non-uniformity of the distribution of the electrically resistive portion 10 due to formation of the cutouts 90 can be reduced. Therefore, the stick substrate 150 can be heated more uniformly.

As illustrated in Fig. 2, the two or more cutouts 90 are formed in a staggered manner in the transverse direction. For example, a cutout 90A is formed on the lower side. A cutout 90B is formed on the upper side. A cutout 90C is formed on the lower side. According to such a configuration, the heater 121 can uniformly cover the side surface of the container 140 in the transverse direction and uniformly heat the stick substrate 150.

As illustrated in Fig. 2, the electrically insulative portion 20 according to the present embodiment is formed in an M-shape having the three cutouts 90 and three folds (i.e., second portions 22A to 22C).

In other words, the electrically insulative portion 20 includes four first portions 21 (21A to 21D) each extending in the vertical direction and the three second portions 22 (22A to 22C) each of which connects ends of two of the first portions 21 to each other, the two first portions 21 being adjacent to each other in the transverse direction. The two first portions 21 connected to each other by one of the second portions 22 are isolated from each other with one of the cutouts 90 interposed therebetween in the transverse direction. More specifically, the second portion 22A connects the upper end of the first portion 21A and the upper end of the first portion 21B to each other. The first portion 21A and the first portion 21B are isolated from each other with the cutout 90A interposed therebetween. The second portion 22B connects the lower end of the first portion 21B and the lower end of the first portion 21C to each other. The first portion 21B and the first portion 21C are isolated from each other with the cutout 90B interposed therebetween. The second portion 22C connects the upper end of the first portion 21C and the upper end of the first portion 21D to each other. The first portion 21C and the first portion 21D are isolated from each other with the cutout 90C interposed therebetween.

Two of the second portions 22 that are connected to the same first portion 21 are isolated from each other in the vertical direction. More specifically, the second portion 22A and the second portion 22B that are connected to the first portion 21B are isolated from each other in the vertical direction. The second portion 22B and the second portion 22C that are connected to the first portion 21C are isolated from each other in the vertical direction.

The electrically insulative portion 20 covers less than 50% of the side surface of the container 140 in all cross sections perpendicular to the vertical direction. In a cross-section taken along line A-A of Fig. 2, the electrically insulative portion 20 covers a portion of the side surface of the container 140, the portion having a length of 11.8 mm ((1.5 mm + 2.9 mm + 1.5 mm)×2), which is less than 50% of the entire 23.7 mm length of the side surface. In a cross-section taken along line B-B, the electrically insulative portion 20 covers a portion of the side surface of the container 140, the portion having a length of 11.6 mm (2.9 mm × 4), which is less than 50% of the entire 23.7 mm length of the side surface. In a cross-section taken along line C-C, the electrically insulative portion 20 covers a portion of the side surface of the container 140, the portion having a length of 11.7 mm ((1.5 mm + 2.9 mm + 1.5 mm) + 2.9 mm × 2), which is less than 50% of the entire 23.7 mm length of the side surface. According to such a configuration, also the electrically resistive portion 10 covers less than 50% of the side surface of the container 140 in all cross sections perpendicular to the vertical direction. Therefore, the stick substrate 150 canbe prevented from being excessively heated.

As illustrated in Fig. 2 and Fig. 3, the electrically resistive portion 10 is provided so as to follow the shape of the electrically insulative portion 20 by being folded together with the folds of the electrically insulative portion 20. In other words, the electrically resistive portion 10 is formed in an M-shape having the three cutouts 90 and three folds. In the first portions 21, two paths are provided. According to such a configuration, the electrically resistive portion 10 is disposed at a larger portion of the side surface of the container 140, and thus, the heating efficiency can be improved.

As illustrated in Fig. 3 and Fig. 4, the thermal diffusion layer 30 is disposed so as to cover the outer side of the heater 121. The thermal diffusion layer 30 is a member that diffuses heat. The thermal diffusion layer 30 is made of, for example, copper, graphite, or aluminum. For example, the thermal diffusion layer 30 is formed in a film-like shape and covers the outer side of the container 140 and the outer side of the heater 121, which is disposed around the container 140. The thermal diffusion layer 30 is disposed in such a manner as to be in close contact with the outer side of the heater 121 or the outer side of the container 140 corresponding to the cutouts 90. According to such a configuration, the heat produced by the heater 121 can be diffused to the entire side surface of the container 140. Therefore, the temperature difference between the portion of the side surface of the container 140 at which the heater 121 is disposed and the portion of the side surface of the container 140 at which the cutouts 90 are formed can be reduced, and the stick substrate 150 can be uniformly heated.

The heater 121 is disposed around the container 140 and fixed to the container 140 by the heat-shrinkable tube 50 while being covered with the thermal diffusion layer 30 and the heat insulating layer 40. The heat insulating layer 40 is a film-shaped member having a predetermined heat insulation property. For example, the heat insulating layer 40 is made of a vacuum heat insulator, an aerogel heat insulator, or the like. Since the thermal diffusion layer 30 is covered with the heat insulating layer 40, the heat produced by the heater 121 and diffused by the thermal diffusion layer 30 can be prevented from being diffused to the outside of the heat insulating layer 40. The heat-shrinkable tube 50 is a tubular member that shrinks when heat is applied thereto. For example, the heat-shrinkable tube 50 is made of a resin material. In a state where the heater 121, the thermal diffusion layer 30, the heat insulating layer 40, and the heat-shrinkable tube 50 are sequentially wound around the container 140, the heat-shrinkable tube 50 is heated, so that these structural elements can be easily fixed in place.

Note that the heat insulating layer 40 corresponds to the heat insulator 144 illustrated in Fig. 1. Obviously, the heat insulating layer 40 may be provided separately from the heat insulator 144 illustrated in Fig. 1.

In the vertical direction, the heater 121 may have a plurality of areas that produce heat at different temperatures. As an example, the heater 121 may have a high heating area that produces heat at a high temperature and a low heating area that produces heat at a low temperature. According to such a configuration, the stick substrate 150 can be heated with an optimum temperature distribution.

The electrically resistive portion 10 may be unevenly distributed in the vertical direction. As an example, the electrically resistive portion 10 may be distributed at different densities in the high heating area and the low heating area. According to such a configuration, the heater 121 can be caused to produce heat at different temperatures in the vertical direction.

### <3. Supplementary Description>

Although the preferred embodiment of the present invention has been described in detail above with reference to the accompanying drawings, the present invention is not limited to such examples. It is obvious that those who have ordinary knowledge in the technical field to which the present invention pertains can conceive various modifications and corrections within the scope of the technical idea described in the claims, and it should be understood that such modifications and corrections naturally pertain to the technical scope of the present invention.

For example, although the case where the two or more cutouts 90 are formed in a staggered manner in the transverse direction has been described in the above embodiment, the present invention is not limited to such a case. The two or more cutouts 90 may be formed in a staggered manner in another direction such as the vertical direction. Even in this case, the heater 121 can uniformly cover the side surface of the container 140 and uniformly heat the stick substrate 150.

For example, although the case where the electrically insulative portion 20 has the three cutouts 90 has been described in the above embodiment, the present invention is not limited to such a case. The electrically insulative portion 20 may at least have one or more cutouts 90. In other words, the electrically insulative portion 20 may at least include two or more first portions 21 and one or more second portions 22. The number of the cutouts 90 may be freely set in accordance with, for example, the shape of the container 140.

More specifically, although the case where the electrically insulative portion 20 is formed in an M-shape having the three cutouts 90 and the three folds has been described in the above embodiment, the present invention is not limited to such a case. For example, the electrically insulative portion 20 may be formed in a zigzag shape. Here, the term "zigzag shape" refers to a shape having four or more cutouts 90 and four or more folds.

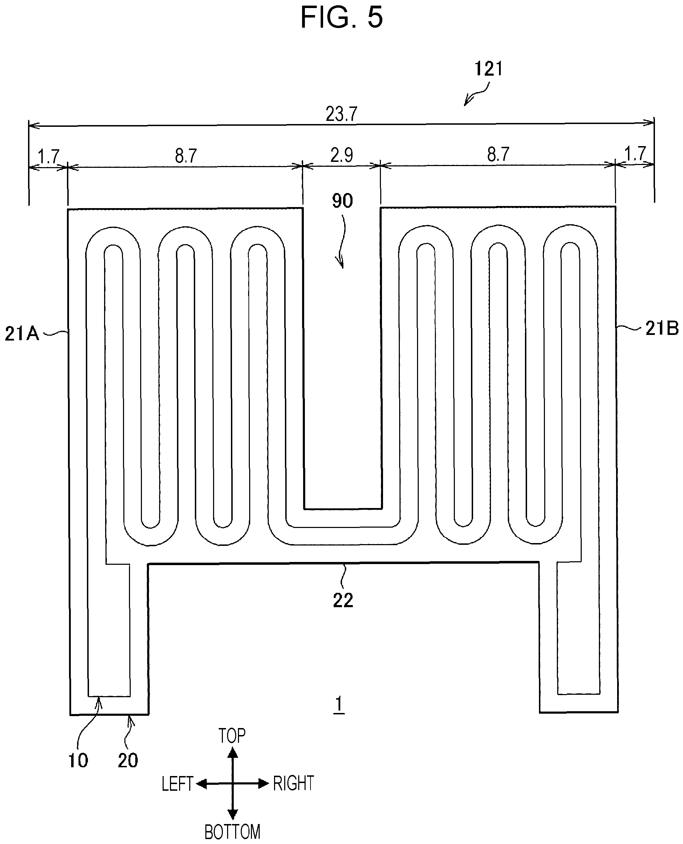

For example, although the case where the electrically resistive portion 10 is provided so as to follow the shape of the electrically insulative portion 20 by being folded together with the folds of the electrically insulative portion 20 has been described in the above embodiment, the present invention is not limited to such a case. In other words, the number of the folds of the electrically resistive portion 10 may be different from the number of the folds of the electrically insulative portion 20. Such a case will now be described with reference with Fig. 5. Fig. 5 is a developed plan view of the heater 121 according to a modification. As illustrated in Fig. 5, the electrically insulative portion 20 according to the present modification has one cutout 90 and one fold (i.e., one second portion 22). In other words, the electrically insulative portion 20 includes two first portions 21 and the one second portion 22. In contrast, the electrically resistive portion 10 is folded five times in each of the first portion 21A and the first portion 21B. As mentioned above, the number of the folds of the electrically resistive portion 10 may be larger than the number of the folds of the electrically insulative portion 20.

For example, although the case where the thermal diffusion layer 30 is disposed so as to cover the outer side of the heater 121 has been described in the above embodiment, the present invention is not limited to such a case. For example, the thermal diffusion layer 30 may be disposed between the heater 121 and the container 140. In this case, the heat insulating layer 40 is disposed so as to cover the outer side of the heater 121. Also with such a configuration, the heat produced by the heater 121 can be diffused to the entire side surface of the container 140, and the stick substrate 150 can be uniformly heated.

For example, although the case where the heater 121, the thermal diffusion layer 30, and the heat insulating layer 40 are fixed to the container 140 by the heat-shrinkable tube 50 has been described in the above embodiment, the present invention is not limited to such a case. For example, the heater 121, the thermal diffusion layer 30, and the heat insulating layer 40 may be fixed in place by a clip. Here, the clip is a member that clamps an object, and for example, the clip clamps the container 140 from the front and rear. Alternatively, at least one of the thermal diffusion layer 30 and the heat insulating layer 40 may be configured as a clip and may clamp the container 140.

For example, although the case where the container 140 is formed in a cylindrical shape has been described in the above embodiment, the present invention is not limited to such a case. The cross-sectional shape of the container 140 may be an oval shape or may be a polygonal shape.

Note that configurations such as those described below also pertain to the technical scope of the present invention.
(1) An aerosol generation system comprising:
   a container into which an aerosol generation article is inserted;
   a heater that heats the aerosol generation article inserted into the container; and
   a power supply unit that supplies electric power to the heater,
   wherein the heater includes
      at least one electrically insulative portion that has a film-like shape and one or more cutouts, and
      an electrically resistive portion that is disposed on the electrically insulative portion and that produces heat by using electric power supplied by the power supply unit, and
   wherein the heater is disposed around the container.
(2) The aerosol generation system according to (1),
   wherein the one or more cutouts of the electrically insulative portion are two or more cutouts that are formed in a staggered manner.
(3) The aerosol generation system according to (2),
   wherein the two or more cutouts are formed in a staggered manner in a direction perpendicular to directions in which the aerosol generation article is inserted and extracted.
(4) The aerosol generation system according to any one of (1) to (3),
   wherein the electrically insulative portion includes two or more first portions extending in directions in which the aerosol generation article is inserted and extracted and one or more second portions connecting ends of two of the first portions to each other, the two first portions being adjacent to each other in a direction perpendicular to the directions in which the aerosol generation article is inserted and extracted, and
   wherein the two first portions connected to each other by the one or more second portions are isolated from each other with the one or more cutouts interposed between the two first portions in the direction perpendicular to the directions in which the aerosol generation article is inserted and extracted.
(5) The aerosol generation system according to (4),
   wherein the two or more first portions of the electrically insulative portion are three or more first portions, and the one or more second portions of the electrically insulative portion are two or more second portions, and
   wherein two of the second portions that are connected to the same one of the first portions are isolated from each other in the directions in which the aerosol generation article is inserted and extracted.
(6) The aerosol generation system according to any one of (1) to (5),
   wherein the electrically insulative portion is formed in an M-shape.
(7) The aerosol generation system according to any one of (1) to (5),
   wherein the electrically insulative portion is formed in a zigzag shape.
(8) The aerosol generation system according to any one of (1) to (7),
   wherein the electrically insulative portion covers less than 50% of a side surface of the container in all cross sections perpendicular to directions in which the aerosol generation article is inserted and extracted.
(9) The aerosol generation system according to any one of (1) to (8),
   wherein the at least one electrically insulative portion of the heater includes two electrically insulative portions, and
   wherein the electrically resistive portion is sandwiched between the two electrically insulative portions.
(10) The aerosol generation system according to any one of (1) to (9), further comprising:
   a thermal diffusion layer that diffuses heat,
   wherein the thermal diffusion layer is disposed in such a manner as to cover an outer side of the heater.
(11) The aerosol generation system according to (10),
   wherein the thermal diffusion layer is made of copper, graphite, or aluminum.
(12) The aerosol generation system according to (10) or (11),
   wherein the heater is disposed around the container and fixed to the container by a heat-shrinkable tube while being covered with the thermal diffusion layer and a heat insulating layer.
(13) The aerosol generation system according to any one of (1) to (12),
   wherein the heater has a plurality of areas that produce heat at different temperatures in directions in which the aerosol generation article is inserted and extracted.
(14) The aerosol generation system according to any one of (1) to (13),
   wherein the electrically resistive portion is unevenly distributed in directions in which the aerosol generation article is inserted and extracted.
(15) The aerosol generation system according to any one of (1) to (14),
   wherein the electrically insulative portion is made of a polyimide.
(16) The aerosol generation system according to (15),
   wherein the electrically insulative portion is a film.
(17) The aerosol generation system according to (15),
   wherein the electrically insulative portion is a varnish.
(18) The aerosol generation system according to any one of (1) to (17),
   wherein the electrically resistive portion is made of a SUS.
(19) The aerosol generation system according to any one of (1) to (18),
   wherein the electrically resistive portion is a conductive track.
(20) The aerosol generation system according to any one of (1) to (19), further comprising:
   the aerosol generation article.

### Reference Signs List

- 100: inhaler device
- 111: power supply
- 112: sensor
- 113: notifier
- 114: memory
- 115: communicator
- 116: controller
- 121: heater
- 140: container
- 141: internal space
- 142: opening
- 143: bottom
- 144: heat insulator
- 150: stick substrate
- 151: substrate
- 152: inhalation port
- 10: electrically resistive portion
- 20: electrically insulative portion
- 21: first portion
- 22: second portion
- 30: thermal diffusion layer
- 40: heat insulating layer
- 50: heat-shrinkable tube
- 90: cutout

## Claims

1. An aerosol generation system comprising:
a container into which an aerosol generation article is inserted;
a heater that heats the aerosol generation article inserted into the container; and
a power supply unit that supplies electric power to the heater,
wherein the heater includes
at least one electrically insulative portion that has a film-like shape and one or more cutouts, and
an electrically resistive portion that is disposed on the electrically insulative portion and that produces heat by using electric power supplied by the power supply unit, and
wherein the heater is disposed around the container.

2. The aerosol generation system according to claim 1,
wherein the one or more cutouts of the electrically insulative portion are two or more cutouts that are formed in a staggered manner.

3. The aerosol generation system according to claim 2,
wherein the two or more cutouts are formed in a staggered manner in a direction perpendicular to directions in which the aerosol generation article is inserted and extracted.

4. The aerosol generation system according to any one of claims 1 to 3,
wherein the electrically insulative portion includes two or more first portions extending in directions in which the aerosol generation article is inserted and extracted and one or more second portions connecting ends of two of the first portions to each other, the two first portions being adjacent to each other in a direction perpendicular to the directions in which the aerosol generation article is inserted and extracted, and
wherein the two first portions connected to each other by the one or more second portions are isolated from each other with the one or more cutouts interposed between the two first portions in the direction perpendicular to the directions in which the aerosol generation article is inserted and extracted.

5. The aerosol generation system according to claim 4,
wherein the two or more first portions of the electrically insulative portion are three or more first portions, and the one or more second portions of the electrically insulative portion are two or more second portions, and
wherein two of the second portions that are connected to the same one of the first portions are isolated from each other in the directions in which the aerosol generation article is inserted and extracted.

6. The aerosol generation system according to any one of claims 1 to 5,
wherein the electrically insulative portion is formed in an M-shape.

7. The aerosol generation system according to any one of claims 1 to 5,
wherein the electrically insulative portion is formed in a zigzag shape.

8. The aerosol generation system according to any one of claims 1 to 7,
wherein the electrically insulative portion covers less than 50% of a side surface of the container in all cross sections perpendicular to directions in which the aerosol generation article is inserted and extracted.

9. The aerosol generation system according to any one of claims 1 to 8,
wherein the at least one electrically insulative portion of the heater includes two electrically insulative portions, and wherein the electrically resistive portion is sandwiched between the two electrically insulative portions.

10. The aerosol generation system according to any one of claims 1 to 9, further comprising:
a thermal diffusion layer that diffuses heat,
wherein the thermal diffusion layer is disposed in such a manner as to cover an outer side of the heater.

11. The aerosol generation system according to claim 10,
wherein the thermal diffusion layer is made of copper, graphite, or aluminum.

12. The aerosol generation system according to claim 10 or 11,
wherein the heater is disposed around the container and fixed to the container by a heat-shrinkable tube while being covered with the thermal diffusion layer and a heat insulating layer.

13. The aerosol generation system according to any one of claims 1 to 12,
wherein the heater has a plurality of areas that produce heat at different temperatures in directions in which the aerosol generation article is inserted and extracted.

14. The aerosol generation system according to any one of claims 1 to 13,
wherein the electrically resistive portion is unevenly distributed in directions in which the aerosol generation article is inserted and extracted.

15. The aerosol generation system according to any one of claims 1 to 14,
wherein the electrically insulative portion is made of a polyimide.

16. The aerosol generation system according to claim 15,
wherein the electrically insulative portion is a film.

17. The aerosol generation system according to claim 15,
wherein the electrically insulative portion is a varnish.

18. The aerosol generation system according to any one of claims 1 to 17,
wherein the electrically resistive portion is made of a SUS.

19. The aerosol generation system according to any one of claims 1 to 18,
wherein the electrically resistive portion is a conductive track.

20. The aerosol generation system according to any one of claims 1 to 19, further comprising:
the aerosol generation article.
